# EUROPÄISCHE PATENTSCHRIFT

(11) **EP 0 620 229 B1**
(45) Veröffentlichungstag und Bekanntmachung des Hinweises auf die Patenterteilung: **09.12.1998**
(21) Anmeldenummer: 94103406.8
(22) Anmeldetag: 07.03.1994
(51) Int. Cl.: C07F 17/00, C07F 17/02

(54) **Verfahren zur Herstellung von Übergangsmetallkomplexen mit monosubstituierten Cyclopentadienyl-Liganden**
Process for the preparation of complexes between transition metals and mono-substituted cyclopentadienyl ligands
Procédé de préparation de complexes de métaux de transition avec des ligandes cyclopentadiènyles monosubstitués

(30) Priorität: 15.04.1993 DE 4312270
(43) Veröffentlichungstag der Anmeldung: 19.10.1994
(73) Patentinhaber: Witco GmbH, 59180 Bergkamen (DE)
(72) Erfinder: Lisowsky, Richard, Dr., D-59174 Kamen (DE)

(56) Entgegenhaltungen:
- EP-A- 0 256 981
- US-A- 4 992 305
- US-A- 5 200 537
- CHEMICAL ABSTRACTS, vol. 99, no. 19, 7. November 1983, Columbus, Ohio, US; abstract no. 157869g, MIRONOV, V.A. ET AL. 'CYCLIC UNSATURATED COMPOUNDS. 70. METALATION OF CYCLOPENTADIENE BY ALCOHOLATES AND HYDROXIDES OF ALKALI METALS' Seite 568 ; & IZV. VYSSH. UCHEBN. ZAVED., KHIM. KHIM. TECHNOL., Bd.26, Nr.6, 1983 Seiten 759 - 761
- CHEMICAL ABSTRACTS, vol. 85, no. 23, 6. Dezember 1976, Columbus, Ohio, US; abstract no. 176943d, MIRONOV, V.A. ET AL. 'ALKYLCYCLOPENTADIENES' Seite 479 ; & SU-A-520 341 (MIRONOV, V.A. ET AL.)
- CHEMISCHE BERICHTE, Bd.121, 1988 Seiten 1541 - 1552 HOCH, M. ET AL. 'CARBONYLVANADIUM-HALBSANDWICHKOMPLEXE: DARSTELLUNG, STRUKTUR UND 51V-NMR-SPEKTREN VON DERIVATEN DES .ETA.5-C5H5V(CO)4'

## Beschreibung

Die Erfindung betrifft ein Verfahren, das, ausgehend von Cyclopentadien (Cp), in hohen Ausbeuten ohne Isolierung der Zwischenstufen die Herstellung von Übergangsmetallkomplexen, die monosubstituierte Cyclopentadienyl-Liganden tragen, auch in technischem Maßstab gestattet.

Aufgrund der vielfältigen Anwendungsmöglichkeiten obengenannter Übergangsmetallkomplexe als Katalysatoren in der organischen Synthese sowie insbesondere in der Polymerisation von Olefinen ist die effiziente technische Herstellbarkeit von an den Cyclopentadienylresten monosubstituierten Sandwichkomplexen in zunehmendem Maße wichtig geworden.

Die Synthese solcher Verbindungen ist im Prinzip bekannt. Sie erfolgt nach den Reaktionsgleichungen I und II: 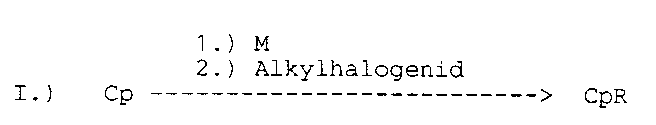 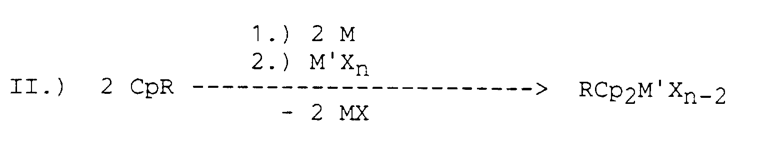 mit:
M = Metallierungsmittel (z. B. Na, K, Lithiumalkyl)
M' = Übergangsmetall (z. B. Fe, Ti, Zr, Hf)
X = Cl, Br, I
R = Alkyl-, Cycloalkyl-, Benzyl-, Vinyl-, Allyl-
n = 2 - 4

Nachteilig dabei ist, daß das substituierte Cyclopentadien (CpR) separat hergestellt werden muß, bevor es weiter umgesetzt werden kann.

Die Ausbeuten an CpR in Stufe I. sind oftmals nur gering, so daß Nebenprodukte aufwendig entfernt werden müssen, bevor entsprechend reines Produkt für eine weitere Umsetzung erhalten werden kann.

Die Eigenschaft der Monoalkylcyclopentadienylverbindungen, Dimere durch intermolekulare Diels-Alder-Reaktion zu bilden, macht die Reinigung kompliziert, da nur durch mehrfache Destillation und thermische Retro-Diels-Alder-Reaktion das Monomere rein erhalten werden kann. Jedoch sind nur diese Monomeren für die Reaktion nach Gleichung II einsetzbar. Sie sind wegen oben genannter Neigung zur Dimerbildung nicht lagerstabil und müssen vor Einsatz nochmals aufwendig thermisch entdimerisiert werden. (Houben-Weyl-Band 5/1c - Methoden der Organischen Chemie, Eugen Müller Verlag (Herausgeber) - Vierte Auflage (1970) - S. 660 - 667; Georg Thieme Verlag, Stuttgart; - Metallocene: Gmelin Handbuch der anorganischen Chemie - Ergänzungswerk zur 8. Auflage - Band 10 und 11: "Zirkonium- und Hafnium-Organische Verbindungen" S. 26 ff - Verlag Chemie, Weinheim - 1973; "Chemistry Of Organo-Zirconium And -Hafnium Compounds", D. J. Cardin; M. F. Lappert; C. L. Raston; 1986, Ellis Horwood Limited).

Zwar gelang es in einzelnen Fällen, die Ausbeuten nach Gleichung I an monosubstituierten Cyclopentadien-Derivaten zu verbessern, aber die Verbindungen fallen entweder noch nicht rein genug für die Umsetzung nach Gleichung II oder in einem Lösungsmittel an, das für eine Umsetzung nach Gleichung II nicht geeignet ist und somit vorher entfernt werden muß, was zu Ausbeuteverlusten und der oben angeführten Problematik der Dimerisierung führt (Izv. Vyssh. Uchebn, Zaved., Khim, Khim, Tekhnol., 26(6), 759 - 761; CA: 99 : 157869 g).

Von besonderem wirtschaftlichen und technischem Interesse ist daher ein Verfahren, welches die genannten Nachteile vermeidet und in einfacher Reaktionsführung die Herstellung von an den Cyclopentadienringen monosubstituierten Metallocenen mit verbesserten Ausbeuten auch in kommerziellem Maßstab ermöglicht.

Überraschenderweise wurde nun gefunden, daß die obengenannten Reaktionen von Cyclopentadien mit Organohalogeniden in hohen Ausbeuten und hoher Reinheit (≥95 %) entsprechend monosubstituierte Cyclopentadiene liefern, die weiterhin ohne Isolierung und ohne Dimerisation direkt umgesetzt in hohen Ausbeuten und hoher Reinheit zu entsprechenden Metallocenen führen.

Die Erfindung betrifft somit ein Verfahren zur Herstellung von Übergangsmetallkomplexen mit monosubstituierten Cyclopentadienyl-Liganden der allgemeinen Formel 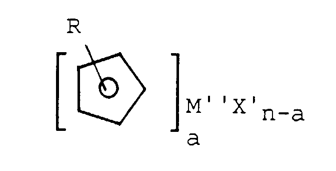 wobei
- R :: eine C₁-C₃₀-Alkylgruppe, C₂-C₃₀-Alkenylgruppe, C₇-C₃₀-Alkylarylgruppe, C₈-C₃₀-Alkenylarylgruppe, C₃-C₁₂-Alkoxyalkylgruppe, C₁-C₃₀-Fluoralkylgruppe oder ein Organoelementrest wie C₁-C₆-Alkyl-C₁-C₁₀-trialkylsilyl

- M'' :: Übergangsmetall (Ti, Zr, Hf, Fe, V, Cr, Sc)
- X' :: Cl, Br, I
- n :: Oxidationszahl des Übergangsmetalls
- a :: ≤ n
bedeuten.

Das Verfahren ist dadurch gekennzeichnet, daß man monomeres Cyclopentadien unter Einsatz einer Mischung aus einem Alkalioxid oder -hydroxid und einem Erdalkalioxid oder -hydroxid als Metallierungsmittel in Glykoldiethern als Lösungsmittel mit Organohalogeniden oder -pseudohalogeniden zum intermediär entstehenden monosubstituierten Cyclopentadien umsetzt, welches in situ metalliert und mit einem Übergangsmetallhalogenid zum Endprodukt umgesetzt wird.

Bevorzugt als Substituent R sind C₃-C₁₈-Alkylgruppen, C₂-C₁₈-Alkenylgruppen, C₃-C₆-Alkoxyalkylgruppen, C₁-C₃-Alkyl-C₁-C₆-trialkylsilylgruppen, insbesondere C₃-C₈-Alkylgruppen, C₂-C₆-Alkenylgruppen.

Als Übergangsmetall werden insbesondere Titan, Zirkonium oder Hafnium eingesetzt.

Die Erfindung betrifft ferner die neue Verbindung Bis(octadecylcyclopentadienyl)ZrCl₂.

Anhand des folgenden Reaktionsschemas wird das Verfahren nachstehend erläutert:

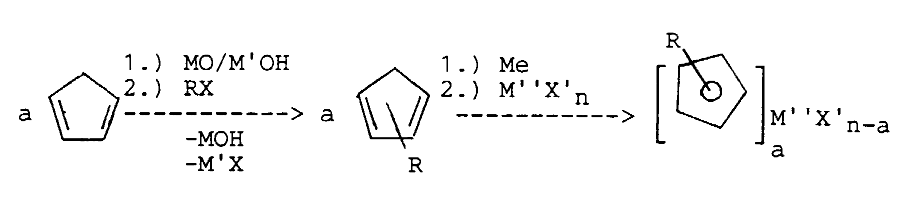

Dabei bedeuten:
- M :: Alkali- oder Erdalkalimetall
- M' :: Alkali- oder Erdalkalimetall
- R :: eine C₁-C₃₀-Alkylgruppe, C₂-C₃₀-Alkenylgruppe, C₇-C₃₀-Alkylarylgruppe, C₈-C₃₀-Alkenylarylgruppe, C₃-C₁₂-Alkoxyalkylgruppe, C₁-C₃₀-Fluoralkylgruppe oder ein Organoelementrest wie C₁-C₆-Alkyl-tri(C₁-C₁₀-alkyl)silyl

- X :: Halogen wie Cl, Br, I oder -OSO₂R' (R': Alkyl, p-Tolyl)
- Me :: Metallierungsmittel (Li, Na, K, NaH, KH, Li-Alkyle usw. (in Literatur bekannte Agenzien zur Metallierung von monomeren Cyclopentadienen)
- M" :: Übergangsmetall, wie Fe, V, Cr, Sc, insbesondere Ti, Zr, Hf
- X' :: Cl, Br, I
- n :: Oxidationszahl des Übergangsmetalls
- a :: ≤ n = Anzahl der zu substituierenden Gruppen X' am Übergangsmetall.

Die Mischung eines Metalloxids und eines Metallhydroxids wird in Glykoldiethern suspendiert. Dabei sind prinzipiell alle Kombinationen an Alkali- und Erdalkalioxiden und -hydroxiden denkbar.

Besonders bewährt haben sich Mischungen aus CaO und NaOH, sowie von MgO und NaOH, wobei als weiteres geeignetes Metalloxid BaO zu nennen ist.

Besonders geeignete Glykolether sind solche der Formel R¹-O-(CH₂CH₂-O)ₙ-R², wobei R¹, R² unabhängig voneinander eine Alkyl- oder Arylgruppen und n = 1 - 12 sind.

Bei Metallierung mit Natrium sind Glykoldiether mit R¹ = R² = Ethyl, n = 2; R¹ = R² = Methyl, n = 2; R¹ = R² = Methyl, n = 3 besonders geeignet.

Für den Fall, daß mit Li-Alkylen metalliert wird, sind noch zusätzlich Glykoldiether mit R¹ = R² = Methyl, n = 1; R¹ = R² = Ethyl, n = 1 besonders geeignet.

Nacheinander werden dann monomeres Cyclopentadien und zu substituierender Rest R in der Form RX zudosiert.

Nach erfolgter Reaktion werden die anfallenden schwerlöslichen Salze abgetrennt sowie - sofern nötig - leichtflüchtige, überschüssige Edukte entfernt.

Die organische Phase kann anschließend ohne Isolierung des Reaktionsprodukts weiter eingesetzt werden, wobei nach in der Literatur bekannten Methoden die Metallierung des substituierten Cyclopentadiens erfolgt.

Besonders geeignet sind z. B. Natrium, Natriumhydrid und Lithiumalkyle. Unmittelbar daran schließt sich die Zugabe des Übergangsmetallhalogenids an.

Nach Abtrennung der anfallenden anorganischen Salze wird das gewünschte Metallocen isoliert und gegebenenfalls mittels Umkristallisation weiter gereinigt.

Der Rohstoff CaO/NaOH ist preiswert verfügbar und im Vergleich zu anderen Metallierungsmitteln wie Natrium oder Lithiumalkylen gefahrloser handhabbar.

Bei der Umsetzung von Cyclopentadien mit RX wird keine Mehrfachsubstitution beobachtet, wie es z. B. beim Einsatz von elementarem Natrium oder Li-Alkylen als Metallierungsmittel der Fall ist. Es wird als Substitutionsprodukt ausschließlich das monosubstituierte Cyclopentadien-Derivat gebildet.

Dies ist um so überraschender, als behauptet wird, daß generell für den Einsatz von CaO/NaOH als Metallierungsmittel in Reaktionen wie Gleichung I Lösungsmittel weit höherer Dielektrizitätskonstanten als THF (z. B. Acetonitril oder Dimethylformamid) erforderlich sind (Dieelektrizitätskonstanten von: Acetonitril: 35,92; Dimethylformamid: 36,71; hingegen Glykoldiether: 5,7 - 7,8) (Literatur: Vestsi Akad. Navuk. BSSR, Ser. Khim Navuk., 1988(1), S. 96 - 97; CA: (109) 148913 q).

Die Anwendung von Glykoldiethern ermöglicht sowohl die Entfernung von eventuell noch vorhandenen Spuren an leichtsiedenden Einsatzstoffen nach der Umsetzung gemäß Gleichung I und vor der Umsetzung gemäß Gleichung II, was die Reinheit des Endproduktes weiter erhöhen kann, als auch die direkte weitere Metallierung und Umsetzung mit einer entsprechenden Übergangsmetallverbindung zum gewünschten Metallocen.

### Beispiele

### Beispiel 1 Herstellung von Bis(n-butylcyclopentadienyl)ZrCl₂

Bei 10 °C werden 14,3 g (216 mmol) monomeres Cyclopentadien zu einer Mischung aus 150 ml Diethylenglykoldiethylether und 27,5 CaO/NaOH - gepulvert - (jeweils 286 mmol) getropft. Sofort anschließend erfolgt die Zudosierung von 19,6 g (143 mmol) n-Butylbromid. Es wird 4 h bei Raumtemperatur nachgerührt.

Mittels leichtem Unterdruck werden das überschüssige Cyclopentadien abgezogen und durch Filtration die anorganischen Salze abgetrennt. Gemäß Gaschromatographie (GC) betragen die Ausbeuten an n-Butylcyclopentadien 95 %.

Das n-Butylcyclopentadien wird durch Zugabe von 2,96 g Natrium (129 mmol) und Rühren bei 170 °C metalliert.

Nach Beendigung der Wasserstoffentwicklung und komplettem Umsatz des Natriums wird auf -10 °C gekühlt und 15 g ZrCl₄ (64,4 mmol) hinzugefügt.

Nach 30 min Rühren bei Raumtemperatur wird die Lösung von ausgefallenem NaCl befreit. Abdestillation des Lösungsmittels liefert 23 g Rohprodukt (57 mmol) ; 88 % Ausbeute, bezogen auf ZrCl₄).

Nach Umkristallisation aus Heptan erhält man 19,9 g (76 %, bezogen auf ZrCl₄) an reinem Produkt.

¹H-NMR-Spektrum (CDCl₃) : 6,3 - 6,13 (m, 8H, -C₅H₄) ; 2,6 (t, 4H, -CH₂-); 1,5 (quintett, 4H, -CH₂-); 1,35 (sextett, 4H, -CH₂-); 0,9 (t, 6H, CH₃).

Gehalt an unsubstituierten Cyclopentadien-Gruppen im Produkt (¹H-NMR: Integral im Bereich 6,3 - 7 ppm): 1,4 %.

Elementaranalyse: Zr: gef.: 22,50 (ber.: 22,55); Cl: gef.: 17,55 (ber.: 17,53).

### Vergleichsbeispiel

Bei Raumtemperatur werden 14,3 g (143 mmol) monomeres Cyclopentadien zu einer Suspension von 5,3 g NaH (170 mmol) getropft und so lange gerührt, bis keine Gasentwicklung mehr festzustellen ist.

Es wird von überschüssigem NaH abfiltriert und die Cyclopentadienylnatriumlösung mit 19,6 g (143 mmol) n-Butylbromid bei 10 °C tropfenweise versetzt.

Nach 4 h Nachreaktion bei Raumtemperatur wird eine Probe gaschromatographisch untersucht.

Neben 78 % an gewünschtem n-Butylcyclopentadien enthält die Reaktionslösung weiterhin 4,5 % Cyclopentadien, 16 % Di-butylcyclopentadien und 1 % Tributylcyclopentadien. Die Reaktionslösung wird durch Anlegen von Vakuum von überschüssigem Cyclopentadien befreit.

Die verbleibenden Cyclopentadien-Derivate werden mittels 129 mmol Natrium bei 170 - 180 °C metalliert. Nach Beendigung der Wasserstoffentwicklung wird auf -10 °C gekühlt und 15 g ZrCl₄ hinzugefügt.

Nach 30 min Rühren wird die Lösung von den ausgefallenen anorganischen Salzen befreit und destillativ das Lösungsmittel entfernt. Nach Umkristallisation aus 200 ml n-Heptan erhält man in 53 %iger Ausbeute (bezogen auf ZrCl₄) 13,8 g Produkt.

Die Untersuchung mittels ¹H-NMR-Spektroskopie ergibt, daß das Produkt nur zu 80 % n-Butylcyclopentadienyl-Gruppen enthält. Die restlichen 20 % sind Cyclopentadienyl- oder mehrfach butylierte Cyclopentadien-Gruppen (gemäß ¹H-NMR; Integral von 6,3 - 7,0 ppm).

### Beispiel 1 a

Es wird analog zu Beispiel 1 gearbeitet. Anstelle von CaO wird jedoch BaO eingesetzt. Die GC-Analytik ergibt eine Ausbeute von n-Butylcyclopentadien von 93 %. Es wird keinerlei Überalkylierung festgestellt - im Gegensatz zu oben gen. Vergleichsbeispiel.

Nach weiterer Umsetzung und Aufarbeitung erhält man in 78 % Ausbeute Bis(n-butylcyclopentadienyl)ZrCl₂.

### Beispiel 2 Herstellung von Bis(n-butylcyclopentadienyl)ZrCl₂

Es wird analog zu Beispiel 1 n-Butylcyclopentadien hergestellt und von anorganischen Salzen und überschüssigem Cyclopentadien befreit. Die so erhaltene Lösung wird auf 0 °C gekühlt und anschließend tropfenweise mit 9,7 g n-Butyl-lithium (90 %ig in Hexan; 136 mmol) versetzt. Man läßt 30 min unter Rühren nachreagieren. Bei 0 - 10 °C werden 15,8 g ZrCl₄ (68 mmol) zugesetzt und 2 h bei Raumtemperatur gerührt.

Der Diethylenglykoldiethylether wird im Vakuum entfernt, der Rückstand in 90 ml Toluol aufgenommen und von ausgefallenem LiCl befreit.

Das Toluol wird abdestilliert und durch 300 ml Heptan ersetzt. Nach 10 minütigem Refluxieren wird auf Raumtemperatur abgekühlt und über Nacht im Tiefkühlschrank bei -20 °C weiteres Material auskristallisiert. Isolierung des Produktes mittels Filtration und Trocknung im Vakuum liefern 20,6 g reines Produkt (75 % Ausbeute, bezogen auf ZrCl₄).

¹H-NMR: identisch mit dem in Beispiel 1.

Elementaranalyse: Zr: gef.: 22,51 % (ber.: 22,55 %); Cl: gef.: 17,50 % (ber.: 17,55).

Gehalt an unsubstituierten Cyclopentadienyl-Gruppen im Produkt: (gem. ¹H-NMR: Integral 6,3 - 7,0 ppm): <0,1 %).

Die Metallierung mittels n-Butyllithium ist insofern von Vorteil, als daß, im Gegensatz zu Beispiel 1, das eingesetzte monomere Cyclopentadien auch hohe Anteile an Dicyclopentadien enthalten kann, ohne daß der Anteil unsubstituierter Cyclopentadiengruppen im Produkt steigt.

### Beispiel 3

Es wird analog zu Beispiel 2 gearbeitet mit der Ausnahme, daß das monomere Cyclopentadien zusätzlich 15 % Dicyclopentadien enthält. Man erhält nach Durchführung der Synthese 21,7 g (79 %) reines Produkt (unsubstituierte Cyclopentadiengruppen gemäß ¹H-NMR im Produkt: <1 %).

### Beispiel 4

Es wird analog zu Beispiel 2 gearbeitet. Anstelle von Butylbromid wird Butyliodid eingesetzt. Es werden 19,7 g (71 %) reines Produkt isoliert.

### Beispiel 5

Es wird analog zu Beispiel 2 gearbeitet mit der Änderung, daß anstelle von n-Butylbromid iso-Butylbromid eingesetzt wird. Nach Aufarbeitung werden 20,5 g Produkt (74,5 %) isoliert.

¹H-NMR-Spektrum (CDCl₃): 6,28 - 6,18 (m, 8H, -C₅H₄); 2,46 (d, 4H, CH₂); 1,74 (nonett, 2H, CH); 0,86 (d, 6H, CH₃).

Unsubstituierte Cyclopentadien-Gruppen im Produkt (gemäß ¹H-NMR: Integral von 6,28 - 7 ppm): 1,9 %.

Zr: gef.: 22,50 (ber.: 22,55); Cl: gef.: 17,25 (ber.: 17,55).

### Beispiel 6

Es wird analog zu Beispiel 2 gearbeitet, wobei als Alkylhalogenid Cyclopentylbromid eingesetzt wird. Es können in 63 %iger Ausbeute (bezogen auf ZrCl₄) 18,4 g Produkt isoliert werden.

¹H-NMR: 6,28 - 6,18 (m, 8H, -C₅H₄) ;
3,15 (quintett, 2H, CH); 2,1 - 1,9 (m, 4H, -CH₂-), 1,74 - 1,4 (m, 12H, -CH₂-).

Zr: gef.: 21,40 (ber.: 21,29); Cl: gef.: 16,50 (ber.: 16,55).

### Beispiel 7

Es wird analog zu Beispiel 2 gearbeitet. Anstelle von Diethylenglykoldiethylether wird Diethylenglykoldimethylether eingesetzt. Man erhält 21 g reines Produkt.

### Beispiel 8

Es wird analog zu Beispiel 2 gearbeitet. Anstelle von Diethylenglykoldiethylether wird Triethylenglykoldimethylether eingesetzt. Es werden 20,1 g reines Produkt isoliert.

### Beispiel 9

Es wird analog zu Beispiel 2 gearbeitet. Anstelle von n-Butylbromid wird Benzylchlorid eingesetzt. Es können 19,8 g reines Produkt isoliert werden.

¹H-NMR (CDCl₃): 7,4 - 7,0 (m, 10 H, C₆H₅); 6,3 - 6,1 (m, 8 H; C₅H₄);4,0 (s, 4H,-CH₂-),

Zweckmäßigerweise verwendet man das zur Metallierung eingesetzte Metalloxid/-hydroxid in Überschüssen von 0 - 100 %, bevorzugt 10 - 50 %, das Cyclopentadien in Überschüssen von 0 - 100 %, bevorzugt 10 - 30 %, wobei das Cyclopentadien beliebige Mengen an Dicyclopentadien enthalten kann (bevor-zugt 0 - 30 %).

Die Reaktion wird bei Temperaturen von -20 bis 200 °C durchgeführt, bevorzugt bei -10 bis 170 °C, wenn mit Natrium metalliert wird, bei -10 bis 30 °C, wenn mittels Lithiumalkyl metalliert wird.

### Beispiel 10

Es wird analog zu Beispiel 2 gearbeitet. Anstelle von CaO wird jedoch MgO eingesetzt. Nach der Umsetzung des Cyclopentadiens mit n-Butylbromid wird zu 95 % n-ButylCp erhalten (GC-Kontrolle).

Weitere Umsetzung und Isolierung des Endproduktes liefern 75 % d. Th. Bis(n-butylcyclopentadienyl)ZrCl₂.

### Beispiel 11 Herstellung von Bis(n-butylcyclopentadienyl) TiCl₂

Es wird analog zu Beispiel 2 gearbeitet. Anstelle von ZrCl₄ werden 12,2 g TiCl₄ (64,4 mmol) zugesetzt.

Es können 17 g Produkt (47 mmol; 73 % d. Th. bezogen auf TiCl₄) in Form eines hellroten Feststoffes isoliert werden.

¹H-NMR (CDCl₃) 6,4 - 6,3 (m, 8 H, -C₅H₄); 2,68 (t, 4 H, -CH₂-) 1,53 (quintett; 4 H, -CH₂-); 1,33 (sextett; 4 H, -CH₂-); 0,9 (t, 6 H, CH₃).

Ti: gef.: 13,4 % (ber.: 13,25)); Cl: gef.: 19,6 % (ber.: 19,6).

### Beispiel 12 Herstellung von Bis(n-butylcyclopentadienyl)HfCl₂

Es wird analog zu Beispiel 2 gearbeitet. Anstelle von ZrCl₄ werden 20,6 g HfCl₄ eingesetzt. Es können 25,1 g Produkt als weißer Feststoff isoliert werden (51 mmol; 79 % d. Th. bezogen auf HfCl₄).

¹H-NMR (CDCl₃) 6,22 - 2,09 (m, 8 H - C₅H₄); 2,66 (t, 4 H, -CH₂-) 1,53 (quintett, 4 H, -CH₂); 1,34 (sextett, 4 H, -CH₂-); 0,92 (t; 6 H, -CH₃).

Hf: gef.: 37,7 % (ber.: 36,3 %); Cl: gef.: 14,5 % (ber.: 14,4 %).

### Beispiel 13 Herstellung von Bis(i-propylcyclopentadienyl)ZrCl₂

Bei 10 °C werden 42,6 g (0,64 mol) monomeres Cyclopentadien zu einer Mischung aus gepulvertem CaO (48,1 g) und NaOH (34,32 g) in 450 ml Ethylenglykoldimethylether getropft.

Sofort anschließend werden 52,8 g (0,43 mol) 2-Brompropan innerhalb von 75 min zugegeben.

Es wird 4 h bei Raumtemperatur nachgerührt und anschließend mittels GC-Analytik der Umsatz kontrolliert. Es wird zu 93 % i-Propylcyclopentadien gebildet. Anorganische Salze werden mittels Filtration abgetrennt.

Zur Entfernung überschüssiger, leichtflüchtiger Einsatzstoffe werden 200 ml Diethylether zugesetzt und mittels Anlegen von Unterdruck wieder abgezogen.

Die so erhaltene Lösung wird bei 0 °C mit 120 ml n-BuLi (2,5 molar in Hexan; 0,3 mol) versetzt.

Man läßt 1 h unter Rühren bei Raumtemperatur nachreagieren. Zwischen 0 - 10 °C werden 34,95 g ZrCl₄ (0,15 mol) eingetragen und 2 h bei Raumtemperatur unter Rühren zur Reaktion gebracht.

Alle flüchtigen Bestandteile werden abdestilliert und der Rückstand in 300 mol Toluol aufgenommen und mittels Filtration von den anorganischen Salzen befreit.

Das Toluol wird abdestilliert und durch 500 ml Heptan ersetzt. Nach 30 min Refluxieren wird bei -20 °C zur Kristallisation gebracht.

Es können 44 g (78 %) an Bis(i-propylcyclopentadienyl)ZrCl₂ isoliert werden.

¹H-NMR: (CDCl₃) 6,28 - 8,18 (m, 8 H, -C₅H₄) ; 3,09 (septett, 2 H, -CH-); 1,18 (d, 12 H, -CH₃).

Zr: gef.: 24,0 (ber.: 24,2); Cl: gef.: 18,1 (ber.: 18,8).

### Beispiel 14 Herstellung von Bis(octadecylcyclopentadienyl)ZrCl₂

Es wird analog zu Beispiel 2 gearbeitet. Anstelle von n-Butylbromid wird Octadecylbromid eingesetzt. Es werden 39,3 g (72,5 % Ausbeute d. Th.; ber. auf ZrCl₄) Produkt isoliert.

¹H-NMR: (CDCl₃) 6,28 - 6,19 (m, 8 H, -C₅H₄) ; 2,60 (t, 4 H, -CH₂-); 1,53 (m, 4 H, -CH₂-); 1,25 (m, 30 H, -CH₂); 0,87 (t, 6 H, -CH₃).

Zr: gef.: 11,4 (ber.: 11,4); Cl: gef.: 8,4 (ber.: 8,9).

## Patentansprüche

1. Verfahren zur Herstellung von Übergangsmetallkomplexen mit monosubstituierten Cyclopentadienyl-Liganden der allgemeinen Formel 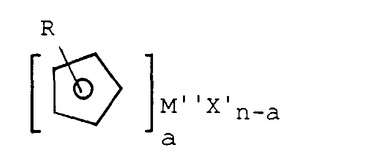 wobei
R : eine C₁-C₃₀-Alkylgruppe, C₂-C₃₀-Alkenylgruppe, C₇-C₃₀-Alkylarylgruppe, C₈-C₃₀-Alkenylarylgruppe, C₃-C₁₂-Alkoxyalkylgruppe, C₁-C₃₀-Fluoralkylgruppe oder ein Organoelementrest wie C₁-C₆-Alkyl-C₁-C₁₀-trialkylsilyl
M" : Übergangsmetall (Ti, Zr, Hf, Fe, V, Cr, Sc)
X' : Cl, Br, I
n : Oxidationszahl des Übergangsmetalls
a : ≤ n
bedeuten, dadurch gekennzeichnet, daß man monomeres Cyclopentadien unter Einsatz einer Mischung aus einem Alkalioxid oder -hydroxid und einem Erdalkalioxid oder -hydroxid als Metallierungsmittel in Glykoldiethern als Lösungsmittel mit Organohalogeniden oder -pseudohalogeniden zum intermediär entstehenden monosubstituierten Cyclopentadien umsetzt, welches in situ metalliert und mit einem Übergangsmetallhalogenid zum Endprodukt umgesetzt wird.

2. Verfahren gemäß Anspruch 1, dadurch gekennzeichnet, daß der Substituent R eine C₃-C₁₈-Alkylgruppe, C₂-C₁₈-Alkenylgruppe, C₃-C₆-Alkoxyalkylgruppe oder C₁-C₃-Alkyl-C₁-C₆-trialkylsilylgruppe ist.

3. Verfahren gemäß Anspruch 2, dadurch gekennzeichnet, daß R eine C₃-C₈-Alkylgruppe oder C₂-C₆-Alkenylgruppe ist.

4. Verfahren gemäß an den Ansprüchen 1 bis 3, dadurch gekennzeichnet, daß das Übergangsmetall Titan, Zirkonim oder Hafnium ist.

5. Bis(octadecylcyclopentadienyl)ZrCl₂.

## Claims

1. Process for the preparation of transition metal complexes having monosubstituted cyclopentadienyl ligands of the general formula 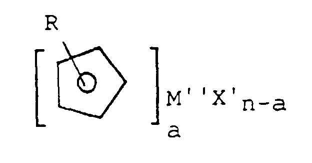 where
R is a C₁-C₃₀-alkyl group, C₂-C₃₀-alkenyl group, C₇-C₃₀-alkylaryl group, C₈-C₃₀-alkenylaryl group, C₃-C₁₂-alkoxyalkyl group, C₁-C₃₀-fluoroalkyl group or an organo-element radical such as C₁-C₆-alkyl-C₁-C₁₀-trialkylsilyl
M'' is a transition metal (Ti, Zr, Hf, Fe, V, Cr, Sc)
X' is Cl, Br, I
n is the oxidation number of the transition metal
a is ≤ n,
characterized in that monomeric cyclopentadiene is reacted with organic halides or pseudohalides, using a mixture of an alkali metal oxide or hydroxide and an alkaline earth metal oxide or hydroxide as metallating agent in glycol diethers as solvent, to form the intermediate monosubstituted cyclopentadiene, which in situ is metallated and reacted with a transition metal halide to give the final product.

2. Process according to Claim 1, characterized in that the substituent R is a C₃-C₁₈-alkyl group, C₂-C₁₈-alkenyl group, C₃-C₆-alkoxyalkyl group or C₁-C₃-alkyl-C₁-C₆-trialkylsilyl group.

3. Process according to Claim 2, characterized in that R is a C₃-C₈-alkyl group or C₂-C₆-alkenyl group.

4. Process according to Claims 1 to 3, characterized in that the transition metal is titanium, zirconium or hafnium.

5. Bis(octadecylcyclopentadienyl)ZrCl₂.

## Revendications

1. Procédé de préparation de complexes de métaux de transition avec des ligands cyclopentadiényle monosubstitués de formule générale : 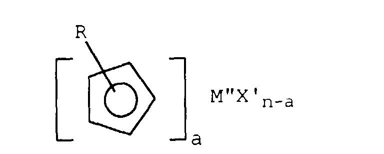 dans laquelle :
R signifie un radical alcoyle en C₁-C₃₀, un radical alcényle en C₂-C₃₀, un radical alcoylaryle en C₇-C₃₀, un radical alcénylaryle en C₈-C₃₀, un radical alcoxyalcoyle en C₃-C₁₂, un radical fluoroalcoyle en C₁-C₃₀ ou un radical organoélémentaire comme (alcoyle en C₁-C₆)tri(alcoyle en C₁-C₁₀)silyle;
M" signifie un métal de transition (Ti, Zr, Hf, Fe, V, Cr, Sc);
X' signifie Cl, Br, I;
n signifie l'étage d'oxydation du métal de transition, et
a ≤ n,
caractérisé en ce que l'on fait réagir du cyclopentadiène monomère, avec addition, comme agent de métallisation, d'un mélange d'un oxyde ou d'un hydroxyde alcalin et d'un oxyde ou d'un hydroxyde alcalino-terreux, dans des diéthers de glycol comme solvant, avec des organohalogénures ou organopseudohalogénures pour former un cyclopentadiène monosubstitué intermédiaire qui est métallisé in situ et mis à réagir avec un halogénure de métal de transition pour donner le produit final.

2. Procédé suivant la revendication 1, caractérisé en ce que le substituant R est un radical alcoyle en C₃-C₁₈, un radical alcényle en C₂-C₁₈, un radical alcoxyalcoyle en C₃-C₆ ou un radical (alcoyle en C₁-C₃)tri(alcoyle en C₁-C₆)silyle.

3. Procédé suivant la revendication 2, caractérisé en ce que R est un radical alcoyle en C₃-C₈ ou un radical alcényle en C₂-C₆.

4. Procédé suivant les revendications 1 à 3, caractérisé en ce que le métal de transition est le titane, le zirconium ou l'hafnium.

5. Bis(octadécylcyclopentadiényl)ZrCl₂.
